(19) Europäisches Patentamt
European Patent Office
Office européen des brevets

(11) EP 2 346 200 B1

(12) EUROPEAN PATENT SPECIFICATION

(45) Date of publication and mention
of the grant of the patent:
**05.11.2014 Bulletin 2014/45**

(51) Int Cl.:
*H04L 5/00* (2006.01)     *H04W 72/06* (2009.01)

(21) Application number: **10150631.9**

(22) Date of filing: **13.01.2010**

(54) **Method, device and computer program for determining information derived from at least a first, a second and a third parameter**

Verfahren, Vorrichtung und Computerprogramm zur Bestimmung von Informationen, die von mindestens einem ersten, einem zweiten und einem dritten Parameter abgeleitet sind

Procédé, dispositif et programme informatique pour déterminer les informations dérivées d'au moins un premier, un deuxième et un troisième paramètre

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.07.2011 Bulletin 2011/29**

(73) Proprietors:
• **Mitsubishi Electric R&D Centre Europe B.V.**
  **1119 NS Schiphol Rijk (NL)**
  Designated Contracting States:
  **FR**
• **Mitsubishi Electric Corporation**
  **Chiyoda-ku**
  **Tokyo 100-8310 (JP)**
  Designated Contracting States:
  **AT BE BG CH CY CZ DE DK EE ES FI GB GR HR HU IE IS IT LI LT LU LV MC MK MT NL NO PL PT RO SE SI SK SM TR**

(72) Inventors:
• **Ciochina, Cristina**
  **35708, RENNES Cedex 7 (FR)**
• **Higashinaka, Masatsugu**
  **35708, RENNNES Cedex 7 (FR)**
• **Brunel, Loïc**
  **35708, RENNES Cedex 7 (FR)**

(74) Representative: **Maillet, Alain**
  **Cabinet Le Guen Maillet**
  **5, place Newquay**
  **B.P. 70250**
  **35802 Dinard Cedex (FR)**

(56) References cited:
**EP-A2- 2 136 503     WO-A1-2009/043208**

• "3rd Generation Partnership Project; Technical Specification Group Radio Access Network; Evolved Universal Terrestrial Radio Access (E-UTRA); Physical layer procedures (Release 8)" 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.8.0, 1 September 2009 (2009-09-01), pages 1-81, XP050377563
• ASUSTEK: "Non-contiguous uplink resource allocation for LTE-A" 3GPP DRAFT; R1-093881 NON-CONTIGUOUS UPLINK RESOURCE ALLOCATION FOR LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388385 [retrieved on 2009-10-05]
• ZTE: "Uplink Non-contiguous Resource Allocation for LTE-Advanced" 3GPP DRAFT; R1-093803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388317 [retrieved on 2009-10-05]

**Description**

The present invention relates generally to a method and a device for determining information derived from at least a first, a second and a third parameters which enable a mobile station to identify which resources of a wireless telecommunication network are allocated to the mobile station.

More precisely, the present invention is in the field of the signalling of resources allocated to a mobile station in a wireless telecommunication network.

Orthogonal Frequency-Division Multiplexing (OFDM) is based upon the principle of frequency-division multiplexing (FDM) and is implemented as a digital modulation scheme. The bit stream to be transmitted is split into several parallel bit streams, typically dozens to thousands. The available frequency spectrum is divided into several sub-channels, and each low-rate bit stream is transmitted over one subchannel by modulating a sub-carrier using a standard modulation scheme, for example PSK, QAM, etc. The sub-carrier frequencies are chosen so that the modulated data streams are orthogonal to each other, meaning that cross talk between the sub-channels is eliminated.

The primary advantage of OFDM is its ability to cope with severe channel conditions, for example, multipath and narrowband interference, without complex equalization filters. Channel equalization is simplified by using many slowly modulated narrowband signals instead of one rapidly modulated wideband signal.

A variation called DFT spread OFDM or SC-FDMA (Single Carrier Frequency-Division Multiple Access) has been developed. In this system, each symbol to be transmitted is spread over a set of transmitted frequencies by a DFT (Discrete Fourier Transform), the resulting signal is sent over a conventional OFDMA transmission system.

Actual implementation of coding/decoding are made either in the frequency domain or in the time domain while the implementation in the frequency domain may be preferred.

Sometimes, the used subcarriers cannot be allocated in a contiguous sub-band, but need to be separated into several clusters. This leads to Clustered SC-FDMA, which has the advantage of a more flexible subcarrier mapping with respect to localized SC-FDMA, leading to more scheduling gain and better multi-user multiplexing.

The patent application document EP 2 136 503 discloses a radio resource scheduling mechanism for uplink/downlink packet data transmission in a cellular orthogonal frequency division multiplexing (OFDM) wireless packet communication system. Virtual Resource Blocks VRBs and Physical Resource Blocks are managed by a mapping relationship between their respective indexes. This document further discloses a bitmap method and a compact method for allocating such VRBs.

The patent application document WO 2009/043208 discloses a resource allocation mechanism in which a sender determines a total number NRB of resources in a system. The sender then determines an amount LCRB of continuous resource blocks to be allocated to a given user equipment and an index RBstart of a starting resource block in the continuous resource blocks allocated to the given user equipment.

The document "3rd Generation Partnership Project; Technical Specification Group Radio Access Network; Evolved Universal Terrestrial Access (E-UTRA); Physical layer procedures (Release 8), 01 September 2009" discloses a resource allocation type (named resource allocation type 2) having a resource indication value RIV corresponding to a starting resource block RBstart and a length LCRB in terms of virtually contiguous allocated resource blocks.

The documents "Non-contiguous uplink resource allocation for LTE-A", ASUSTEK, 3GPP draft R1-093881, 12 October 2009" and "Uplink non-contiguous resource allocation for LTE-Advanced, ZTE, 3GPP draft R1-093903, 12 October 2009" both compare scheduling performance and overhead of several methods for allocating resource discontinuously, wherein the start and the end of clusters are indicated and wherein clusters may overlap.

The present invention aims at providing. a telecommunication system wherein the sub-carriers allocated to the telecommunication device are or are not consecutive and wherein the signalling of the allocated sub-carriers is reduced.

To that end, the present invention concerns methods for determining a value derived from first, second and third parameters which enable a mobile station to identify which resources of a wireless telecommunication network are allocated to the mobile station by a base station, as defined in the appended set of claims.

The present invention concerns also devices for determining a value derived from first, second and third parameters which enable a mobile station to identify which resources of a wireless telecommunication network are allocated to the mobile station by a base station, as defined in the appended set of claims.

Thus, it is possible to allocate contiguous or non contiguous resources of the wireless telecommunication network to a mobile station with a reduced signalling of the allocated resources.

According to still another aspec, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the method and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless cellular telecommunication network in which the present invention is implemented ;

Fig. 2 is a diagram representing the architecture of a base station in which the present invention is implemented ;

Fig. 3 is a diagram representing the architecture of a mobile station in which the present invention is implemented ;

Fig. 4 illustrates the architecture of the encoder comprised in a mobile station according to a particular embodiment of the invention in frequency domain ;

Fig. 5 illustrates the architecture of the decoder of a base station having one or several receive antennas according to a particular embodiment of the invention ;

Fig. 6 represents an example of two clusters of groups of resource blocks allocated to a mobile station and parameters according to the present invention ;

Fig. 7 discloses an example of an algorithm executed by a base station in order to indicate the at least three parameters which represent the groups of resource blocks allocated to a mobile station ;

Fig. 8 represents a first method according to a first mode of realization for indicating different values that can take information representing three parameters which enable the mobile station to identify which groups of resource blocks are allocated to the mobile station ;

Fig. 9 represents a table used according to a particular mode of realization of the first mode of realization of the present invention;

Fig. 10 represents a second method according to a second mode of realization for indicating different values that can take information representing three parameters which enable the mobile station to identify which groups of resource blocks are allocated to the mobile station ;

Fig. 11 discloses an example of an algorithm executed by a mobile station according to the present invention;

Fig. 12 represents a third method according to a third mode of realization for indicating different values that can take information representing at least three parameters which enable the mobile station to identify which groups of resource blocks are allocated to the mobile station .

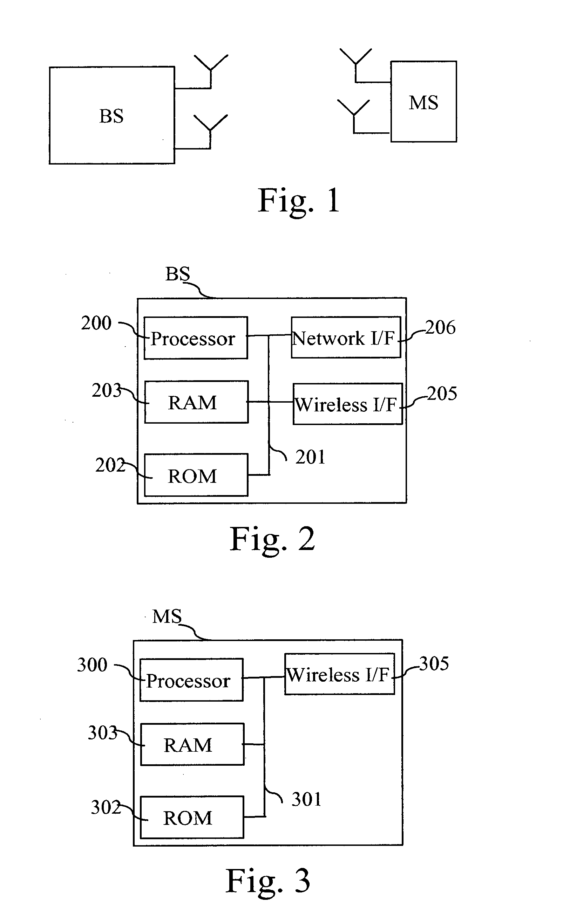

**Fig. 1** represents a wireless cellular telecommunication network in which the present invention is implemented.

The present invention will be described in an example wherein the telecommunication system is a wireless cellular telecommunication system.

The present invention is also applicable to wireless or wired telecommunication systems like Local Area Networks.

In that case, the base station and mobile station are emitters and/or receivers.

In Fig. 1, one base station BS of a wireless cellular telecommunication network and a mobile station MS are shown.

The present invention is described when the resources of the wireless cellular telecommunication network to be used by the mobile station MS are allocated by a base station BS.

The resources of the wireless cellular telecommunication network are the frequency spectrum used by the wireless cellular telecommunication network. The frequency spectrum is, for example, decomposed into groups of resource blocks and each resource block comprises a predetermined number of sub-carriers, for example twelve.

It has to be noted here that in a variant a resource block may be composed of a single sub-carrier.

The present invention will be disclosed with groups of resource blocks. The present invention is also applicable to resource blocks.

The base station BS is a base station of a wireless cellular telecommunication network comprising plural base stations.

Only one mobile station MS is shown for the sake of clarity but the wireless cellular telecommunication network may have a more important number of mobile stations MS to communicate with the base station BS.

The base station BS may be named a node or an access point.

The mobile station MS may be a personal computer, a peripheral device like a set top box, or a phone.

According to the invention, the base station BS which handles the mobile station MS or any core network device of the wireless cellular telecommunication network:

- allocates resources to the mobile station,
- determines a couple of first and second parameters which corresponds to the allocated resources, the determined couple having a rank among the couples which correspond to possible allocated resources,
- obtains the value which is at least equal to a sum of the number of possible values that can take the third parameter for each couple of first and second parameters which has a lower rank than the determined couple of first and second parameters,
- transfers at least the determined value to the mobile station.

The mobile station:

- receives a value from the base station, the value being representative of a couple of the first and second parameters which are representative of the resources allocated to the mobile station and of the third parameter which is representative of the resources allocated to the mobile station, the couple having a rank among the couples which correspond to possible allocated resources, the value being is at least equal to a sum of the number of possible values that can take the third parameter for each couple of first and second parameters which has a lower rank than the couple of first and second parameters,

- determines the parameters from the received value,

- identifies the allocated resources from the determined parameters.

**Fig. 2** is a diagram representing the architecture of a base station in which the present invention is implemented.

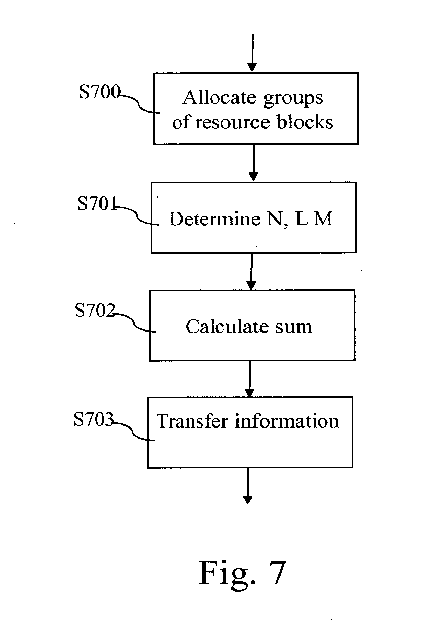

The base station BS has, for example, an architecture based on components connected together by a bus 201 and a processor 200 controlled by the program as disclosed in Fig. 7.

It has to be noted here that the base station BS may have an architecture based on dedicated integrated circuits.

The bus 201 links the processor 200 to a read only memory ROM 202, a random access memory RAM 203, a wireless interface 205 and a network interface 206.

The memory 203 contains registers intended to receive variables and the instructions of the program related to the algorithm as disclosed in Fig. 7.

The processor 200 controls the operation of the network interface 206 and of the wireless interface 205.

The read only memory 202 contains instructions of the program related to the algorithm as disclosed in Fig 7, which are transferred, when the base station BS is powered on, to the random access memory 203.

The base station BS may be connected to a telecommunication network through the network interface 206. For example, the network interface 206 is a DSL (Digital Subscriber Line) modem, or an ISDN (Integrated Services Digital Network) interface, etc.

The wireless interface 205 comprises means for transferring information representative of the sub-carriers allocated to the mobile station MS.

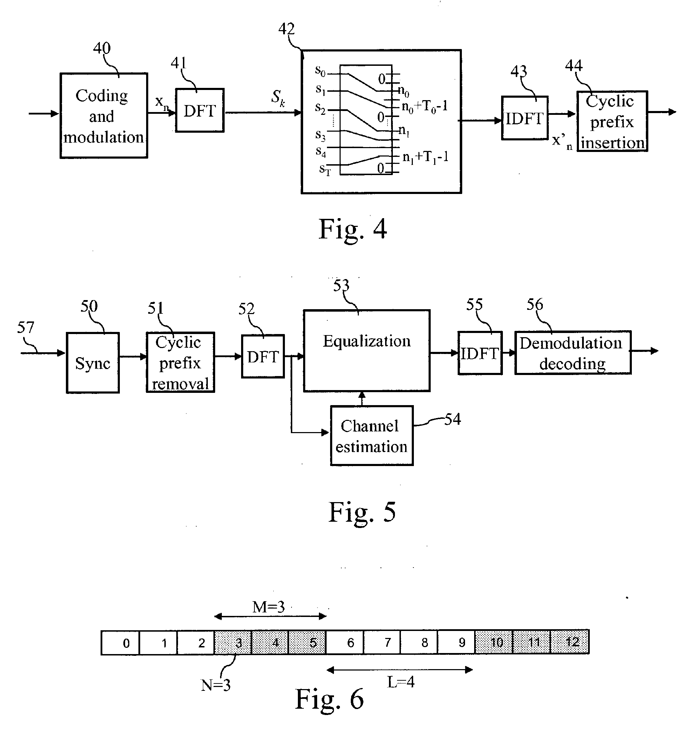

The wireless interface 205 comprises a decoder as disclosed in Fig. 5. The wireless interface 205 may comprise an encoder as disclosed in Fig. 4.

**Fig. 3** is a diagram representing the architecture of a mobile station in which the present invention is implemented.

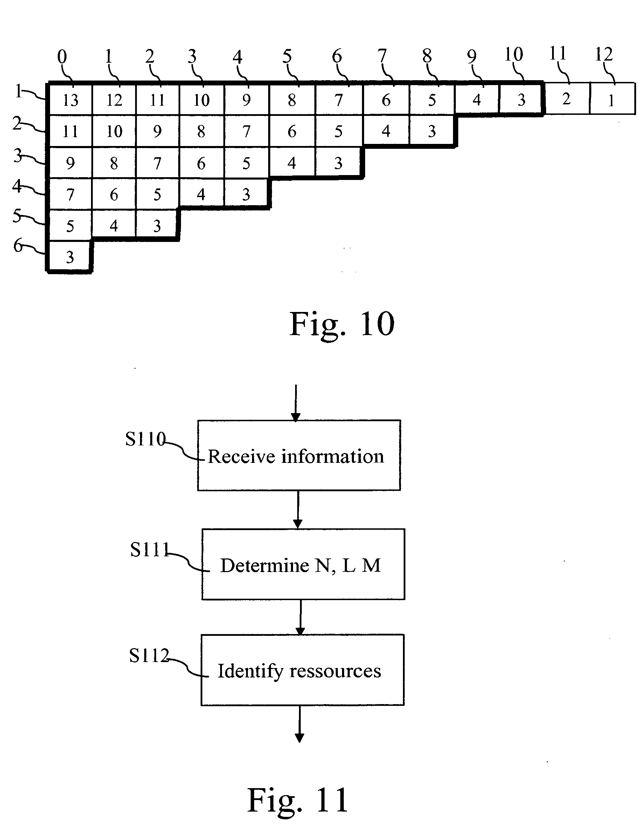

The mobile station MS has, for example, an architecture based on components connected together by a bus 301 and a processor 300 controlled by the program as disclosed in Fig. 11.

It has to be noted here that the mobile station MS may have an architecture based on dedicated integrated circuits.

The bus 301 links the processor 300 to a read only memory ROM 302, a random access memory RAM 303 and a wireless interface 305.

The memory 303 contains registers intended to receive variables and the instructions of the program related to the algorithm as disclosed in Fig. 11.

The processor 300 controls the operation of the wireless interface 305.

The read only memory 302 contains instructions of the program related to the algorithm as disclosed in Fig. 11, which are transferred, when the mobile station MS is powered on, to the random access memory 303.

The wireless interface 305 comprises means for mapping data on sub-carriers comprised in the clusters of sub-carriers allocated to the mobile station MS .

The wireless interface 305 comprises an encoder as disclosed in Fig. 4. The wireless interface 305 may comprise a decoder as disclosed in Fig. 5.

**Fig. 4** illustrates the architecture of the encoder according to a particular embodiment of the invention in frequency domain.

Data to be transmitted are coded and organized as symbols by the coding and modulation module 40 giving a set of symbols $x_n$. Then the signal is spread in the frequency domain by the DFT (Discrete Fourier Transform) module 41. In a variant, the DFT module is replaced by a Fast Fourier Transform module or any other processing module.

In case of OFDMA, DFT module may not be needed.

The symbols spread in the frequency domain are mapped on sub-carriers comprised in the allocated frequency band by a frequency mapping module 42 which maps data to be transferred on sub-carriers. The frequency mapping module 42 comprises zero insertion and/or frequency shaping capabilities.

The frequency mapping module 42 maps symbols on the frequency band allocated to the mobile station MS. As the sub-carriers are not allocated in a contiguous sub-band, the frequency band is separated into several clusters. The frequency mapping module 42 maps symbols on the different clusters of the frequency band allocated to the mobile station MS.

In Fig. 4, the frequency mapping module 42 shows an example wherein $T=T_0+T_1$ symbols are mapped on $T$ sub-carriers of two clusters. A first cluster comprises the sub-carriers noted $n_0$ to $n_0+T_0-1$ and a second cluster comprises the sub-carriers noted $n_1$ to $n_1+T_1-1$.

The symbols outputted by the frequency mapping module 42 are transformed back in the time domain by the IDFT (Inverse Discrete Fourier Transform) module 43.

An optional cyclic prefix insertion module 44 can be applied before transmission through the antenna of the mobile station MS.

**Fig. 5** illustrates the architecture of the decoder of a device according to a particular embodiment of the invention.

At least one signal 57 is received from at least one receive antenna. The synchronization module 50 synchronizes the received signal 57.

The optional cyclic prefix removal module 51 removes the cyclic prefix if used, to the synchronized signal.

The DFT module 52 executes a DFT on the synchronized signal on which the cyclic prefix has been removed or not. In a variant, the DFT module is replaced by a Fast Fourier Transform module or any other processing module.

A channel estimation module 54 will work on the signals provided by the DFT module 52. The output of the channel estimation module 54 commands an equalization module 53. The output of the equalization module 53 is processed by an inverse DFT module 55 before a classical channel decoding module 56 which treats the resulting signal.

In case of OFDMA, IDFT module 55 may not be needed. In other variants, it may be replaced with other processing modules.

The demodulating and decoding module 56 demodulates and decodes the symbols into data.

**Fig. 6** represents an example of two clusters of groups of resource blocks allocated to a mobile station and parameters according to the present invention.

According to the invention, groups of resource blocks allocated to a mobile station are or are not consecutive.

In the example of Fig. 6, two clusters of groups of resource blocks are allocated to one mobile station MS and are not consecutive.

Fig. 6 discloses thirteen groups of resource blocks noted 0 to 12.

In order to limit both the Peak to Average Power Ratio PAPR increase and the signalling overhead, the allocation of two clusters of equal size is assumed.

The present invention intends to define information representing at least three parameters which enable a receiver like a mobile station to identify which groups of resource blocks are allocated to the mobile station, for example for uplink transmission.

The three parameters are the identifier N of the first cluster of group of resource blocks allocated to the mobile station MS, the number M of groups of resource blocks comprised in each cluster of groups of resource blocks allocated to the mobile station and the number L of groups of resource blocks separating the two clusters of groups of resource blocks allocated to the mobile station MS. According to the example of Fig. 6, N is equal to three, M is equal to three and L is equal to four. L and/or M can take other special values in the case of contiguous resource allocation, as it will be disclosed further in this description.

**Fig. 7** discloses an example of an algorithm executed by a base station in order to indicate the at least three parameters which represent the groups of resource blocks allocated to a mobile station.

For example, the present algorithm will be described when it is executed by the processor 200 of the base station BS.

It has to be noted here that in a variant, instead of being executed by the base station BS, the present algorithm is executed by a core network device not shown in Fig. 1 of the wireless cellular telecommunication device for plural base stations BS.

The present algorithm is executed each time clusters of sub-carriers are allocated to a mobile station MS handled by the base station BS.

At step S700, the processor 200 allocates groups of resource blocks to the mobile station MS. The allocated groups of resource blocks are allocated for example according to channel conditions and/or according to required quality of service. The allocated groups of resource blocks are divided into one or two or more clusters.

At next step S701, the processor 200 determines at least three parameters which enable the mobile station to identify which groups of resource blocks are allocated to the mobile station.

At next step S702, the processor 200 calculates an information which is representative of the at least three parameters.

According to a first mode of realisation of the present invention, two or more non contiguous clusters comprising or not an equal number of groups of resource blocks are allocated to the mobile station MS and the information is representative of at least three parameters.

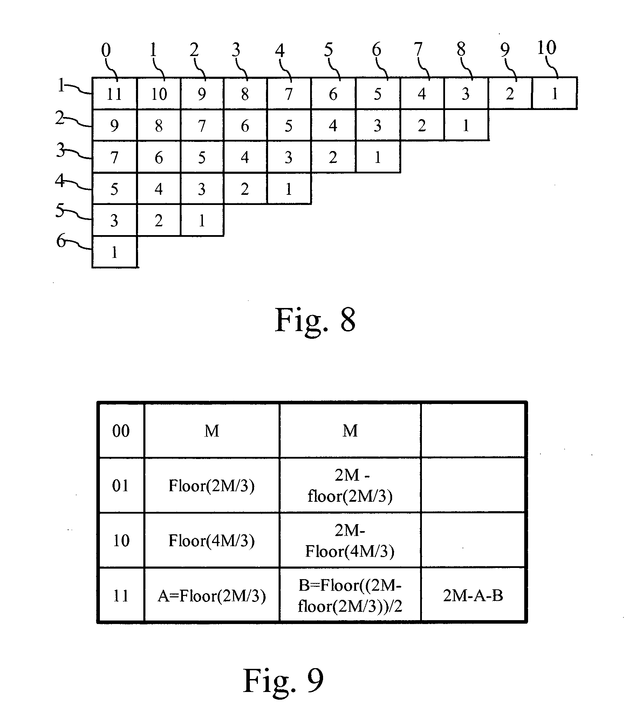

All the possible combinations of M, N are shown in Fig. 8.

**Fig. 8** represents a first method indicating different values that can take information representing three parameters which enable the mobile station to identify which groups of resource blocks are allocated to the mobile station.

In the first method, the first parameter is the number M of groups of resource blocks comprised in each cluster of groups of resource blocks allocated to the mobile station, the second parameter is the identifier or index N of the first cluster of group of resource blocks allocated to the mobile station MS and the third parameter is the number L of groups of resource blocks separating clusters of groups of resource blocks allocated to the mobile station MS. L is at least equal to one.

Fig. 8 discloses an example wherein the total number of groups of resource blocks $N_{RBG}$ is equal to thirteen.

The numbers on the top side of Fig. 8 represent the different values that can take the parameter N.

The numbers on the right side of Fig. 8 represent the different values that can take the parameter M.

A value is comprised in each cell corresponding to the intersection of the row and column of the couple (M,N) of the Fig. 8. The value is associated to the couple (M,N).

The value is equal to the maximum number of different values that can take the parameter L with the couple (M,N).

For each value of N = 0 to $N_{RBG}$-3, M can take values from 1 to floor(($N_{RBG}$-N-1)/2) where floor(x) is the integer par of x.

For each (M,N) couple, L can take values from 1 to $N_{RBG}$-N-2*M.

It has to be noted here that Fig. 8 discloses an example wherein $N_{RBG}$ is odd. If $N_{RBG}$ is even, the last row comprises two cells instead of one on the last row of Fig. 8.

Let us denote by $S_{M1}$ the sum of all the values on the Mth row, that is:

$$S_{M1} = \sum_{i=1}^{N_{RBG}-2M} i = \frac{(N_{RBG} - 2M)(N_{RBG} - 2M + 1)}{2}$$

On a certain row M, let us denote by $S_{M1}(N)$ the partial sum of the first N elements, that is:

$$S_{M1}(N) = \sum_{n=0}^{N-1}(N_{RGB} - 2M - n) = N(N_{RGB} - 2M) - \frac{N(N-1)}{2}$$

$$= N\left(N_{RGB} - 2M - \frac{(N-1)}{2}\right)$$

According to the first mode of realization of the present invention, information representative of the three parameters M, N and L or in other words the determined value is determined according to the following formula:

$$RIV_{g1} = \sum_{m=1}^{M-1} S_{m1} + S_{M1}(N) + L$$

The value $RIV_{g1}$ is equal to the sum of the number of possible values that can take the third parameter L for each couple of first and second parameters (M,N) which has a lower rank than the determined couple of first and second parameters (M,N) plus an information representative of the value of the third parameter L.

A possibility of ranking the couples is to consider that, for example, a couple of first and second parameters have a lower rank than a given couple if the value of the first parameter value is lower than the value of the first parameter of the given couple, or if the value of the first parameter value is equal to the first parameter value of the given couple and the value of the second parameter value is lower than the value of the second parameter of the given couple.

The information representative of the value of the third parameter L is for example equal to L.

The maximum value of $RIV_{g1}$ is $\sum_{m=1}^{floor\left(\frac{N_{RBG}-1}{2}\right)} S_{m1}$ , which equals to the number of possible combinations of M,N and L.

Consequently, $ceil\left(\log_2\left(\sum_{m=1}^{floor\left(\frac{N_{RBG}-1}{2}\right)} S_{m1}\right)\right)$ bits of signalling are needed for representing $RIV_{g1}$,

where ceil(x) is the smallest integer strictly superior to x.

It has to be noted here that, the example of Fig. 8 discloses an example wherein for each possible value of N, a respective column is represented and for each value of M a respective row is represented.

The above mentioned formulas can easily be modified in order to cope with the case wherein for each possible value of M, a respective column is represented and for each value of N, a respective row is represented.

In another variant, parameter M or N could also replaced by the parameter L. The corresponding formula can also easily be derived from the above mentioned ones.

Other rules of ranking the couples of first and second parameters can also be envisaged. The corresponding formulas can also easily be derived from the above mentioned ones.

**Fig. 9** represents a table used according to a particular mode of realization of the first mode of realization of the present invention.

According to that particular mode of realization, two supplementary bits are used in order to indicate if two or three non contiguous clusters of groups of resource blocks allocated to a mobile station MS have or not the same number of groups of resource blocks.

If the supplementary bits value is equal to "00", two non contiguous clusters comprising each M groups of resource blocks are allocated to the mobile station MS.

If the supplementary bits value is equal to "01", two non contiguous clusters comprising respectively floor (2M/3) groups of resource blocks and 2M-floor(2M/3) are allocated to the mobile station MS.

If the supplementary bits value is equal to "10", two non contiguous clusters comprising respectively floor (4M/3) groups of resource blocks and 2M-floor(4M/3) are allocated to the mobile station MS.

If the supplementary bits value is equal to "11", three non contiguous clusters comprising respectively A=floor (2M/3) groups of resource blocks, B=floor((2M-floor(2M/3))/2) groups of resource blocks and 2M-A-B groups of resource blocks are allocated to the mobile station MS.

If the supplementary bits value is equal to "11", the spacing between the first and second clusters of groups of resource blocks is equal to floor(L/2) and the spacing between the second and third clusters of groups of resource blocks is equal to ceil(L/2).

According to a second mode of realization of the present invention, two contiguous or non contiguous clusters are allocated to the mobile station MS.

All the possible combinations of M, N and L are shown in Fig. 10.

**Fig. 10** represents a second method indicating different values that can take information representing three parameters which enable the mobile station to identify which groups of resource blocks are allocated to the mobile station.

The Fig. 10 discloses an example wherein the total number of groups of resource blocks $N_{RBG}$ is equal to thirteen.

The numbers zero to twelve on the top side of Fig. 10 represent the different value that can take the parameter N.

The numbers one to six on the right side of Fig. 10 represent the different values that can take the parameter M. For each value of N = 0 to $N_{RBG}$-3, M can take values from 1 to floor(($N_{RBG}$-N-1)/2) where floor(x) is the integer par of x.

A value is comprised in each cell corresponding to the intersection of the row and column of the couple (M,N) of the Fig. 10. The value is associated to the couple (M,N).

The value is equal to the number of possible values that can take the third parameter.

As it has been disclosed in the first mode of realization of the present invention, L can take values from 1 to $N_{RBG}$-N-2*M for each (M,N) couple for non contiguous clusters of groups of resource blocks.

According to the second mode of realization of the present invention, the third parameter value L=0 is used to signal all the contiguous allocations of even size 2M starting at most at position $N_{RBG}$-3.

According to the second mode of realization of the present invention, the third parameter value L = $N_{RBG}$-N-2*M+1 is used to signal all the contiguous allocations of odd size 2M-1 starting at most at position $N_{RBG}$-3. Naturally, other choices can be made to signal the contiguous cases, as, for example, L=0 for the odd size allocations and L = $N_{RBG}$-N-2*M+1 for the even size allocations.

The value in the case corresponding to the couple (M,N) in the table in Fig. 10 is then increased by two in comparison with the corresponding values for the couples (M,N) in Fig. 8.

In other words, the value associated to the couple (M,N) is equal to the sum of the number plus two of possible values that can take the number of resources separating the two clusters in the case when non-contiguous resource allocation was assumed for the given couple of first and second parameters .

IF M=1 and N=$N_{RBG}$-2 i.e. N is equal to eleven, either the two last groups of resource blocks are allocated to the mobile station MS, or only the group of resource blocks in position $N=N_{RBG}-2$ is allocated to the mobile station MS.

IF M=1 and $N=N_{RBG}-1$ i.e. N is equal to twelve, the last group of resource blocks is allocated to the mobile station MS.

For N =0 to $N_{RBG}-3$, a couple of first and second parameters have a lower rank than a given couple if the value of the first parameter is lower than the value of the first parameter of the given couple, or if the value of the first parameter is equal to the value of the first parameter in the given couple and the value of the second parameter is lower than the value of the second parameter of the given couple.

The couples $(M=1,N=N_{RBG}-2)$ and $(M=1,N=N_{RBG}-2)$ outside the area with a bold border have the rank which is upper than any other couple corresponding to N inferior or equal to $N_{RBG}-3$ in Fig. 10.

Let us denote by $S_{M2}$ the sum of all the values on the Mth row inside the bold area, that is:

$$S_{M2} = \sum_{i=3}^{N_{RBG}-2M+2} i = \frac{(N_{RBG}-2M+2)(N_{RBG}-2M+3)}{2} - 3$$

On a given row M, let us denote by $S_{M2}(N)$ the partial sum of the first N elements, that is:

$$S_{M2}(N) = \sum_{n=0}^{N-1}(N_{RGB}-2M+2-n) = N(N_{RGB}-2M+2) - \frac{N(N-1)}{2}$$

$$= N\left(N_{RGB}-2M+2-\frac{(N-1)}{2}\right)$$

According to the second mode of realisation of the present invention, information representative of the three parameters M, N and L or in other words the determined value is determined according to the following formulas:

$$RIV_{g2} = \sum_{m=1}^{M-1} S_{m2} + S_{M2}(N) + L \quad \text{for two non contiguous allocated clusters of groups of resource blocks,}$$

$$RIV_{g2} = \sum_{m=1}^{M-1} S_{m2} + S_{M2}(N) \quad \text{for} \quad 2M \quad \text{contiguous} \quad \text{allocated} \quad \text{groups} \quad \text{of} \quad \text{resource} \quad \text{blocks,}$$

$$RIV_{g2} = \sum_{m=1}^{M-1} S_{m2} + S_{M2}(N) + N_{RBG} - N - 2M + 1 \quad \text{for 2M-1 contiguous allocated groups of resource blocks,}$$

$$RIV_{g2} = \sum_{m=1}^{M-1} S_{m2} + spec \quad \text{for the three allocations which correspond to the two last groups of resource blocks}$$

outside the bold area, where spec is equal to one if the group of resource blocks in position $N_{RBG}-2$ is allocated to the mobile station MS, spec is equal to two if the group of resource blocks in position $N_{RBG}-1$ is allocated to the mobile station MS, spec is equal to three if the groups of resource blocks in position $N_{RBG}-2$ and $N_{RBG}-1$ are allocated to the mobile station MS.

The value $RIV_{g2}$ for two non contiguous allocated clusters of groups of resource blocks is equal to the sum of the number of possible values that can take the third parameter.

In other words, the value $RIV_{g2}$ for two non contiguous allocated clusters of groups of resource blocks is equal to the sum of the number plus two of possible values that can take the number of resources separating the two clusters in the case when non-contiguous resource allocation was assumed for each couple of first and second parameters which has a lower rank than the determined couple of first and second parameters plus an information representative of the value of the third parameter. Plus two is representative of L taking null value and $N_{RBG}-N-2*M+1$ value and is representative of the possibility of allocating contiguous groups of resource blocks of even or odd size, for each couple of first and second parameters (M, N) which has a lower rank than the determined couple of first and second parameters (M,N).

The value $RIV_{g2}$ for one cluster of an even number 2M of groups of resource blocks is, when N is lower than $N_{RBG}$-3, equal to the sum of the number of possible values that can take the third parameter for each couple of first and second parameters which has a lower rank than the determined couple of first and second parameters.

The value $RIV_{g2}$ for one cluster of an odd number 2M -1of groups of resource blocks is, when N is lower than $N_{RBG}$-3, equal to the sum of the number of possible values that can take the third parameter for each couple of first and second parameters which has a lower rank than the determined couple of first and second parameters plus the total number of resources of the wireless telecommunication network plus one minus two times the first parameter and minus the value of the second parameter.

The maximum value of $RIV_{g2}$ is $\displaystyle\sum_{m=1}^{floor\left(\frac{N_{RBG}-1}{2}\right)} S_{m2} + 3$, which is equal to the number of possible combinations of M,N and L.

Consequently, $ceil\left(\log_2\left(\displaystyle\sum_{m=1}^{floor\left(\frac{N_{RBG}-1}{2}\right)} S_{m2} + 3\right)\right)$ bits of signalling are needed for representing $RIV_{g2}$.

It has to be noted here that, the example of Fig. 10 discloses an example wherein each possible value of N a respective column is represented and for each value of M a respective row is represented.

The above mentioned formulas can easily be modified in order to cope with the case wherein each possible value of M a respective column is represented and for each value ofN a respective row is represented.

In another variant, parameter M or N could also replaced by the parameter L. The corresponding formula can also easily be derived from the above mentioned ones.

In another variant, a special value of L can be used to signal odd allocations of size 2M+1, and three special cases would correspond to allocating the last two, the last or the first block of resource blocks respectively. The first parameter in the case of the contiguous allocation of an odd number of groups of resource blocks becomes the total number of groups of resource blocks minus one, divided by two. The formulas can easily be modified to correspond to this variant.

According to a third mode of realisation of the present invention $K \geq 3$ non contiguous equally spaced clusters of groups of resource blocks are allocated to the mobile station MS.

It has to be noted here that the value of K may be a predetermined value known by the base station BS and the mobile station MS. The value of K may be a value determined by the base station BS and transferred to the mobile station MS.

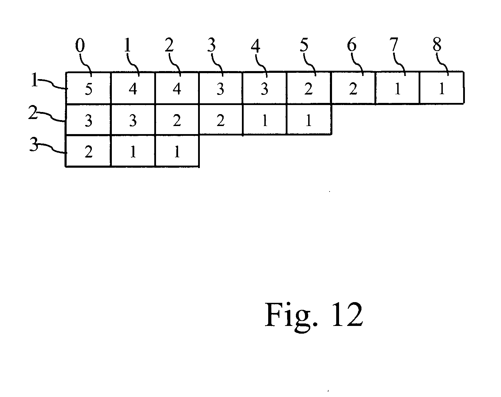

**Fig. 12** represents a third method indicating different values that can take information representing three parameters which enable the mobile station to identify which groups of resource blocks are allocated to the mobile station.

In the third method, the first parameter is the number M of groups of resource blocks comprised in each of the K clusters of groups of resource blocks allocated to the mobile station, the second parameter is the identifier or index N of the first cluster of group of resource blocks allocated to the mobile station MS and the third parameter is the number L of groups of resource blocks separating any two neighbouring clusters of groups of resource blocks allocated to the mobile station MS. L is at least equal to one.

Two clusters of groups of resource blocks allocated to the mobile station MS are neighbouring clusters of groups of resource blocks if there is no cluster of groups of resource blocks allocated to the mobile station MS between the gap separating the two clusters of groups of resource blocks allocated to the mobile station MS.

Fig. 12 discloses an example wherein the total number of groups of resource blocks $N_{RBG}$ is equal to thirteen and K=3 clusters of groups of resource blocks are allocated to the mobile station.

The numbers on the top side of Fig. 12 represent the different values that can take the parameter N.

The numbers on the right side of Fig. 12 represent the different values that can take the parameter M.

A value is comprised in each cell corresponding to the intersection of the row and column of the couple (M,N) of the Fig. 12. The value is associated to the couple (M,N). The value is equal to the maximum number of different values that can take the parameter L with the couple (M,N).

For each value of N = 0 to $N_{RBG}$-2K+1, M can take values from 1 to floor(($N_{RBG}$-K-N+1)/K) where floor(x) is the integer par of x. For each (M,N) couple, L can take values from 1 to floor((NRBG-N-KM)/(K-1)).

Let us denote by $S_{M3}$ the sum of all the values on the Mth line, that is:

$$S_{M3} = \sum_{N=0}^{N_{RBG}-KM-K+1} floor \frac{N_{RBG}-N-KM}{K-1}$$

On a certain row M, let us denote by $S_{M3}(N)$ the partial sum of the first N elements, that is:

$$S_{M3}(N) = \sum_{n=0}^{N-1} floor \frac{N_{RBG}-N-KM}{K-1} \, .$$

According to the third mode of realization of the present invention, information representative of the three parameters M, N and L is determined according to the following formula:

$$RIV_{g3} = \sum_{m=1}^{M-1} S_{m3} + S_{M3}(N) + L$$

Consequently, $ceil\left( \log_2\left( \sum_{m=1}^{floor\left(\frac{N_{RBG}-2K+1}{K-1}\right)} S_{m3} \right) \right)$ bits of signalling are needed for representing $RIV_{g3}$.

If K is a predetermined value known by the base station BS and the mobile station MS, no extra signalling is needed.

If K is determined by the base station BS and transferred to the mobile station MS extra signalling is needed. ceil(log2(Kmax-1)) bits are needed for signalling the value of K to the mobile station MS, where Kmax is the maximum value of K.

According to a fourth mode of realization of the present invention, all possibilities of allocation with any number of clusters are optimally signalled. There is no need to predetermine or to separately transfer the number K of clusters.

Let us denote by $RIV_{g,K}^{3D}(M,N,L) = RIV_{g3} = \sum_{m=1}^{M-1} S_{m3} + S_{M3}(N) + L$ which depends on K since the sums involved all depend on K. We also denote by $RIV_K^{3D}$ the maximal value of $RIV_{g,K}^{3D}(M,N,L)$, that is

$$\sum_{m=1}^{floor\left(\frac{N_{RBG}-2K+1}{K-1}\right)} S_{m3} \, .$$

To signal a given allocation of K equally-spaced equal clusters corresponding to the four dimensions (N,M,L, K) we define:

$$RIV_g^{4D}(N,M,L,K) = \sum_{k=2}^{K-1} RIV_k^{3D} + RIV_{g,K}^{3D}(M,N,L) \, .$$

In the fourth mode of realization, the couple of first and second parameters which corresponds to the allocated resources is (M,N), the third parameter is L and K is a fourth parameter as disclosed in the third mode of realization of the present invention. For a fixed value of K, couples (M,N) are ranked as already disclosed, and groups of couples (M, N) are further ranked in function of K, for example in increasing order of the K parameter.

A possibility of ranking the couples is to consider that, for example, for a given couple (M,N) and for a given fourth parameter K, a couple of first and second parameters (M,N) have a lower rank than the given couple (M,N) if:

- the value of the fourth parameter K is lower than the value of the given fourth parameter K, or

- if the value of the fourth parameter K is equal to the value of the fourth given parameter K and the value of the first parameter is lower than the value of the first parameter of the given couple, or
- if the value of the fourth parameter is equal to the value of the fourth given parameter K and the value of the first parameter is equal to the value of the first parameter of the given couple and the value of the second parameter is lower than the value of the second parameter of the given couple.

Other possibilities of ranking the couples may exist and the above formulas can be easily modified to correspond to other types of ranking.

At next step S705, the processor 200 commands the transfer of information representative of the at least three parameters to the mobile station.

**Fig. 11** discloses an example of an algorithm executed by a mobile station according to the present invention.

More precisely, the present algorithm is executed by the processor 300 of the mobile station MS.

At step S110, the mobile station MS receives information representative of the at least three parameters.

At next step S111, the mobile station MS retrieves the at least three parameters at least from the information representative of the at least three parameters.

According to the first mode of realisation of the present invention, to identify the triplet (M,N,L), the processor 300 determines M by finding the value of M such that , $\sum_{m=0}^{M-1} S_{m1} < RIV_{g1} \le \sum_{m=0}^{M} S_{m1}$ ., $S_0$ being considered to be null value.

The processor 300 determines N by finding the value of N such that

$$\sum_{n=0}^{N} S_{M1}(n) < RIV_{g1} - \sum_{m=0}^{M-1} S_{m1} \le \sum_{n=0}^{N+1} S_{M1}(n) .$$

The processor 300 determines $L = RIV_{g1} - \sum_{m=0}^{M-1} S_{m1} - \sum_{n=0}^{N} S_{M1}(n) .$

The processor 300 determines that it should follow a non-contiguous allocation with two equal clusters comprising M groups of resource blocks, separated by L groups of resource blocks, the start position of the first cluster being given by N.

According to the particular mode of realization of the first mode of realization of the present invention, the processor 300 determines that it should follow a non-contiguous allocation with two or three equal clusters of groups of resource blocks according to the value of the additional bits received at step S110.

According to the second mode of realization of the present invention, to identify the triplet (M,N,L), the processor 300 checks if $RIV_{g2}$ is superior to $\sum_{m=1}^{floor(\frac{N_{RBG}-1}{2})} S_{m2}$ and if so, chooses the corresponding allocation for one or both last groups of resource blocks, in function of the accepted convention for the variable "spec".

Otherwise, the processor 300 determines M by finding the value of M such that $\sum_{m=0}^{M-1} S_{m2} < RIV_{g2} \le \sum_{m=0}^{M} S_{m2}$ wherein $S_0$ is considered to be 0.

The processor 300 determines N by finding the value of N such that

$$\sum_{n=0}^{N} S_{M2}(n) < RIV_{g2} - \sum_{m=0}^{M-1} S_{m2} \le \sum_{n=0}^{N+1} S_{M2}(n) .$$

The processor 300 determines $L = RIV_{g2} - \sum_{m=0}^{M-1} S_{m2} - \sum_{n=0}^{N} S_{M2}(n) .$

If L=0, the processor 300 determines that it should follow a contiguous allocation with a cluster of 2M groups of resource blocks, the cluster starting in position N.

If L = NRBG-N-2M+1, the processor 300 determines that it should follow a contiguous allocation with a cluster of 2M-1 groups of resource blocks and at starting position N.

Otherwise, the processor 300 determines that it should follow a non-contiguous allocation with two equal clusters of M groups of resource blocks each, separated by L groups of resource blocks, the start position of the first cluster being given by N.

According to the third mode of realization, to identify the triplet (M,N,L), the processor 300 determines M by finding the value of M such that $\sum_{m=0}^{M-1} S_{m3} < RIV_{g3} \leq \sum_{m=0}^{M} S_{m3}$ ., So being considered to be null value.

The processor 300 determines N by finding the value of N such that

$$\sum_{n=0}^{N} S_{M3}(n) < RIV_{g3} - \sum_{m=0}^{M-1} S_{m3} \leq \sum_{n=0}^{N+1} S_{M3}(n).$$

The processor 300 determines $L = RIV_{g3} - \sum_{m=0}^{M-1} S_{m3} - \sum_{n=0}^{N} S_{M3}(n).$

The processor 300 determines that it should follow a non-contiguous allocation with K equal clusters comprising M groups of resource blocks, separated by L groups of resource blocks, the start position of the first cluster being given by N.

If K is determined by the base station BS and transferred to the mobile station MS, the processor 300 first determines the value of K and then determines the values of M, N and L as above mentioned.

According to the fourth mode of realization of the present invention, in order to obtain the corresponding (N,M, L,K) from the signalled value $RIV_g^{4D}(N, M, L, K)$, the processor 300 first determines K as the greatest value for which $\sum_{k=2}^{K-1} RIV_k^{3D}$ remains inferior to $RIV_g^{4D}(N, M, L, K)$ and then substracts $\sum_{k=2}^{K-1} RIV_k^{3D}$ from the received value and proceeds as in the third mode of realisation of the present invention.

At next step S112, the mobile station MS identifies the groups of resource blocks which correspond to the at least three parameters.

Naturally, many modifications can be made to the embodiments of the invention described above without departing from the scope of the present invention.

**Claims**

1. Method for determining a value derived from first, second and third parameters which enable a mobile station MS to identify which resources of a wireless telecommunication network are allocated to the mobile station by a base station BS, said resources being subcarriers or resource blocks in the frequency domain, said resources being allocated in two non-contiguous clusters of equal size, the method being executed by the base station, the method comprising a step of:

   - allocating (S700) resources to the mobile station among a total number of resources $N_{RBG}$,
   **characterised in that**:
   - one parameter (N) among the first, second and third parameters is an identifier of the first allocated resource of the first cluster;
   - another parameter (M) among the first, second and third parameters equals to the amount of resources comprised in each cluster;
   - the further parameter (L) among the first, second and third parameters equals to a number of resources separating the two clusters and is at least equal to 1;
   and **in that** the method further comprises the steps of:
   - determining a couple of first and second parameters which correspond to the allocated resources, couples of first and second parameters that correspond to possible allocated resources being ranked in a predefined manner, the determined couple having a rank among said couples,
   - obtaining (S702) said value, which is equal to a sum of the maximum number of possible values that can take the third parameter for each couple of first and second parameters which has a lower rank than the determined couple of first and second parameters plus an information representative of the value of the third parameter,
   - transferring (S703) the obtained value to the mobile station.

2. Method according to claim 1, **characterised in that** wherein a first couple has a lower rank than a second couple if the value of the first parameter of the first couple is lower than the value of the first parameter of the second couple, or if the value of the first parameter of the first couple is equal to the value of the first parameter of the second couple and the value of the second parameter of the first couple is lower than the value of the second parameter of the second couple.

3. Method for determining a value derived from first, second and third parameters which enable a mobile station MS to identify which resources of a wireless telecommunication network are allocated to the mobile station by a base station BS, said resources being subcarriers or resource blocks in the frequency domain, said resources being allocated in two contiguous clusters or in two non-contiguous clusters of equal size, wherein in case of two contiguous clusters the size of one cluster is equal to the size of the other cluster or to the size of the other cluster incremented by one, the method being executed by the base station, the method comprising a step of:

- allocating (S700) resources to the mobile station among a total number of resources $N_{RBG}$,
**characterised in that**:
- one parameter (N) among the first, second and third parameters is an identifier of the first allocated resource of the first cluster;
- another parameter (M) among the first, second and third parameters equals to the overall amount of allocated resources divided by two when the overall amount of allocated resources is even and equals to the overall amount of allocated resources plus one divided by two when the overall amount of allocated resources is odd;
- the further parameter (L) among the first, second and third parameters, in case of resources allocated in two non-contiguous clusters, equals to a number of resources separating the clusters and, in case of contiguous allocated resources, indicates in a predefined manner whether the overall amount of allocated resources is odd or even with either a null value or a value equal to the total number of resources $N_{RBG}$ plus one minus two times the value of said another parameter and minus the value of said one parameter;
and **in that** the method further comprises the steps of:
- determining a couple of first and second parameters which correspond to the allocated resources, couples of first and second parameters that correspond to possible allocated resources being ranked in a predefined manner, the determined couple having a rank among said couples,
- obtaining (S702) said value, which is equal to a sum of the maximum number of possible values that can take the third parameter for each couple of first and second parameters which has a lower rank than the determined couple of first and second parameters plus an information representative of the value of the third parameter,
- transferring (S703) the obtained value to the mobile station.

4. Device for determining a value derived from first, second and third parameters which enable a mobile station MS to identify which resources of a wireless telecommunication network are allocated to the mobile station by a base station BS, said resources being subcarriers or resource blocks in the frequency domain, said resources being allocated in two non-contiguous clusters of equal size, said device comprising:

- means for allocating resources to the mobile station among a total number of resources $N_{RBG}$,
**characterized in that**:
- one parameter (N) among the first, second and third parameters is an identifier of the first allocated resource of the first cluster;
- another parameter (M) among the first, second and third parameters equals to the amount of resources comprised in each cluster;
- the further parameter (L) among the first, second and third parameters equals to a number of resources separating the two clusters and is at least equal to 1;
and **in that** said device further comprises:
- means for determining a couple of first and second parameters which correspond to the allocated resources, couples of first and second parameters that correspond to possible allocated resources being ranked in a predefined manner, the determined couple having a rank said couples,
- means for obtaining said value, which is equal to a sum of the maximum number of possible values that can take the third parameter for each couple of first and second parameters which has a lower rank than the determined couple of first and second parameters plus an information representative of the value of the third parameter,
- means for transferring the obtained value to the mobile station.

5. Device for determining a value derived from first, second and third parameters which enable a mobile station MS to identify which resources of a wireless telecommunication network are allocated to the mobile station by a base station BS, said resources being subcarners or resource blocks in the frequency domain, said resources being allocated in two contiguous clusters or in two non-contiguous clusters of equal size, wherein in case of two contiguous clusters the size of one cluster is equal to the size of the other cluster or to the size of the other cluster incremented by one, the method being executed by the base station, said device comprising:

- means for allocating contiguous resources to the mobile station among a total number of resources $N_{RBG}$, **characterised in that**:
- one parameter (N) among the first, second and third parameters is an identifier of the first allocated resource of the first;
- another parameter (M) among the first, second and third parameters equals to the overall amount of allocated resources divided by two when the overall amount of allocated resources is even and equals to the overall amount of allocated resources plus one divided by two when the overall amount of allocated resources is odd;
- the further parameter (L) among the first, second and third parameters, in case of resources allocated in two non-contiguous clusters, equals to a number of resources separating the clusters and, in case of contiguous allocated resources, indicates in a predefined manner whether the overall amount of allocated resources is odd or even with either a null value or a value equal to the total number of resources $N_{RBG}$ plus one minus two times the value of said another parameter and minus the value of said one parameter;
and **in that** said device further comprises:
- means for determining a couple of first and second parameters which correspond to the allocated resources, couples of first and second parameters that correspond to possible allocated resources being ranked in a predefined manner, the determined couple having a rank among said couples,
- means for obtaining said value, which is equal to a sum of the maximum number of possible values that can take the third parameter for each couple of first and second parameters which has a lower rank than the determined couple of first and second parameters plus an information representative of the value of the third parameter,
- means for transferring the obtained value to the mobile station.

6. Computer program which can be directly loadable into a programmable device, comprising instructions or portions of code for implementing the steps of the method according to any one of claims 1 and 2, or the steps of the method according to claim 3, when said computer program is executed on the programmable device.

7. Information storage means comprising a computer program which can be directly loadable into a programmable device, comprising instructions or portions of code for implementing the steps of the method according to any one of claims 1 and 2, or the steps of the method according to claim 3, when said information storage means are read by the programmable device and said computer program is executed on the programmable device.

**Patentansprüche**

1. Verfahren zum Bestimmen eines Werts, der von einem ersten, einem zweiten und einem dritten Parameter abgeleitet ist, die ermöglichen, dass eine mobile Station MS identifiziert, welche Ressourcen eines drahtlosen Telekommunikationsnetzwerks der mobilen Station durch eine Basisstation BS zugeteilt sind, wobei die Ressourcen Hilfsträger oder Ressourcenblöcke im Frequenzbereich sind, wobei die Ressourcen in zwei nicht aneinandergrenzenden Clustern gleicher Größe zugeteilt sind, wobei das Verfahren durch die Basisstation ausgeführt wird, wobei das Verfahren einen folgenden Schritt aufweist:

- Zuteilen (S700) von Ressourcen zu der mobilen Station unter einer gesamten Anzahl von Ressourcen $N_{RBG}$, **dadurch gekennzeichnet, dass**:
- ein Parameter (N) unter dem ersten, dem zweiten und dem dritten Parameter ein Identifizierer der ersten zugeteilten Ressource des ersten Clusters ist;
- ein anderer Parameter (M) unter dem ersten, dem zweiten und dem dritten Parameter gleich der Menge an Ressourcen ist, die in jedem Cluster umfasst sind;
- der weitere Parameter (L) unter dem ersten, dem zweiten und dem dritten Parameter gleich einer Anzahl von Ressourcen ist, die die zwei Cluster trennen, und wenigstens gleich 1 ist;
und dass das Verfahren weiterhin die folgenden Schritte aufweist:
- Bestimmen eines Paars eines ersten und eines zweiten Parameters, die den zugeteilten Ressourcen entsprechen, wobei Paare eines ersten und eines zweiten Parameters, die möglichen zugeteilten Ressourcen entsprechen, auf eine vordefinierte Weise in einen Rang eingereiht sind, wobei das bestimmte Paar einen Rang unter den Paaren hat,
- Erhalten (S702) des Werts, der gleich einer Summe der maximalen Anzahl möglicher Werte ist, die den dritten Parameter für jedes Paar eines ersten und eines zweiten Parameters annehmen können, das einen niedrigeren Rang als das bestimmte Paar eines ersten und eines zweiten Parameters hat, plus einer Information, die den Wert des dritten Parameters darstellt,
- Transferieren (S703) des erhaltenen Werts zu der mobilen Station.

2. Verfahren nach Anspruch 1, **dadurch gekennzeichnet, dass** ein erstes Paar einen niedrigeren Rang als ein zweites Paar hat, wenn der Wert des ersten Parameters des ersten Paars niedriger als der Wert des ersten Parameters des zweiten Paars ist oder wenn der Wert des ersten Parameters des ersten Paars gleich dem Wert des ersten Parameters des zweiten Paars ist und der Wert des zweiten Parameters des ersten Paars niedriger als der Wert des zweiten Parameters des zweiten Paars ist.

3. Verfahren zum Bestimmen eines Werts, der von einem ersten, einem zweiten und einem dritten Parameter abgeleitet ist, die ermöglichen, dass eine mobile Station MS identifiziert, welche Ressourcen eines drahtlosen Telekommunikationsnetzwerks der mobilen Station durch eine Basisstation BS zugeteilt sind, wobei die Ressourcen Hilfsträger oder Ressourcenblöcke im Frequenzbereich sind, wobei die Ressourcen in zwei aneinandergrenzenden Clustern oder in zwei nicht aneinandergrenzenden Clustern gleicher Größe zugeteilt sind, wobei in einem Fall zweier aneinandergrenzender Cluster die Größe von einem Cluster gleich der Größe des anderen Clusters oder der Größe des anderen Clusters inkrementiert um eins ist, wobei das Verfahren durch die Basisstation ausgeführt wird, wobei das Verfahren einen folgenden Schritt aufweist:

- Zuteilen (S700) von Ressourcen zu der mobilen Station unter einer gesamten Anzahl von Ressourcen $N_{RBG}$, **dadurch gekennzeichnet, dass**:
- ein Parameter (N) unter dem ersten, dem zweiten und dem dritten Parameter ein Identifizierer der ersten zugeteilten Ressource des ersten Clusters ist;
- ein anderer Parameter (M) unter dem ersten, dem zweiten und dem dritten Parameter gleich der gesamten Menge an zugeteilten Ressourcen geteilt durch zwei ist, wenn die gesamte Menge an zugeteilten Ressourcen geradzahlig ist, und gleich der gesamten Menge an zugeteilten Ressourcen plus eins geteilt durch zwei ist, wenn die gesamte Menge an zugeteilten Ressourcen ungeradzahlig ist;
- der weitere Parameter (L) unter dem ersten, dem zweiten und dem dritten Parameter in einem Fall von in zwei nicht aneinandergrenzenden Clustern zugeteilten Ressourcen gleich einer Anzahl von Ressourcen ist, die die Cluster trennen, und in einem Fall von aneinandergrenzenden zugeteilten Ressourcen auf eine vordefinierte Weise mit entweder einem Nullwert oder einem Wert gleich der gesamten Anzahl von Ressourcen $N_{RBG}$ plus ein minus zweimal dem Wert des anderen Parameters und minus dem Wert des einen Parameters anzeigt, ob die gesamte Menge von zugeteilten Ressourcen ungeradzahlig oder geradzahlig ist;
und dass das Verfahren weiterhin die folgenden Schritte aufweist:
- Bestimmen eines Paars eines ersten und eines zweiten Parameters, die den zugeteilten Ressourcen entsprechen, wobei Paare eines ersten und eines zweiten Parameters, die möglichen zugeteilten Ressourcen entsprechen, auf eine vordefinierte Weise in einen Rang eingereiht sind, wobei das bestimmte Paar einen Rang unter den Paaren hat,
- Erhalten (S702) des Werts, der gleich einer Summe der maximalen Anzahl möglicher Werte ist, die den dritten Parameter für jedes Paar eines ersten und eines zweiten Parameters annehmen können, das einen niedrigeren Rang als das bestimmte Paar eines ersten und eines zweiten Parameters hat, plus einer Information, die den Wert des dritten Parameters darstellt,
- Transferieren (S703) des erhaltenen Werts zu der mobilen Station.

4. Vorrichtung zum Bestimmen eines Werts, der von einem ersten, einem zweiten und einem dritten Parameter abgeleitet ist, die ermöglichen, dass eine mobile Station MS identifiziert, welche Ressourcen eines drahtlosen Telekommunikationsnetzwerks der mobilen Station durch eine Basisstation BS zugeteilt sind, wobei die Ressourcen Hilfsträger oder Ressourcenblöcke im Frequenzbereich sind, wobei die Ressourcen in zwei nicht aneinandergrenzenden Clustern gleicher Größe zugeteilt sind, wobei die Vorrichtung folgendes aufweist:

- Mittel zum Zuteilen von Ressourcen zu der mobilen Station unter einer gesamten Anzahl von Ressourcen $N_{RBG}$, **dadurch gekennzeichnet, dass**:
- ein Parameter (N) unter dem ersten, dem zweiten und dem dritten Parameter ein Identifizierer der ersten zugeteilten Ressource des ersten Clusters ist;

- ein anderer Parameter (M) unter dem ersten, dem zweiten und dem dritten Parameter gleich der Menge an Ressourcen ist, die in jedem Cluster umfasst sind;

- der weitere Parameter (L) unter dem ersten, dem zweiten und dem dritten Parameter gleich einer Anzahl von Ressourcen ist, die die zwei Cluster trennen, und wenigstens gleich 1 ist;

und dass die Vorrichtung weiterhin folgendes aufweist:

- Mittel zum Bestimmen eines Paars eines ersten und eines zweiten Parameters, die den zugeteilten Ressourcen entsprechen, wobei Paare eines ersten und eines zweiten Parameters, die möglichen zugeteilten Ressourcen entsprechen, auf eine vordefinierte Weise in einen Rang eingereiht sind, wobei das bestimmte Paar einen Rang unter den Paaren hat,

- Mittel zum Erhalten des Werts, der gleich einer Summe der maximalen Anzahl möglicher Werte ist, die den dritten Parameter für jedes Paar eines ersten und eines zweiten Parameters annehmen können, das einen niedrigeren Rang als das bestimmte Paar eines ersten und eines zweiten Parameters hat, plus einer Information, die den Wert des dritten Parameters darstellt,

- Mittel zum Transferieren des erhaltenen Werts zu der mobilen Station.

5. Vorrichtung zum Bestimmen eines Werts, der von einem ersten, einem zweiten und einem dritten Parameter abgeleitet ist, die ermöglichen, dass eine mobile Station MS identifiziert, welche Ressourcen eines drahtlosen Telekommunikationsnetzwerks der mobilen Station durch eine Basisstation BS zugeteilt sind, wobei die Ressourcen Hilfsträger oder Ressourcenblöcke im Frequenzbereich sind, wobei die Ressourcen in zwei aneinandergrenzenden Clustern oder in zwei nicht aneinandergrenzenden Clustern gleicher Größe zugeteilt sind, wobei in einem Fall zweier aneinandergrenzender Cluster die Größe von einem Cluster gleich der Größe des anderen Clusters oder der Größe des anderen Clusters inkrementiert um eins ist, wobei das Verfahren durch die Basisstation ausgeführt wird, wobei die Vorrichtung folgendes aufweist:

- Mittel zum Zuteilen von aneinandergrenzenden Ressourcen zu der mobilen Station unter einer gesamten Anzahl von Ressourcen $N_{RBG}$, **dadurch gekennzeichnet, dass**:

- ein Parameter (N) unter dem ersten, dem zweiten und dem dritten Parameter ein Identifizierer der ersten zugeteilten Ressource des ersten Clusters ist;

- ein anderer Parameter (M) unter dem ersten, dem zweiten und dem dritten Parameter gleich der gesamten Menge an zugeteilten Ressourcen geteilt durch zwei ist, wenn die gesamte Menge an zugeteilten Ressourcen geradzahlig ist, und gleich der gesamten Menge an zugeteilten Ressourcen plus eins geteilt durch zwei ist, wenn die gesamte Menge an zugeteilten Ressourcen ungeradzahlig ist;

- der weitere Parameter (L) unter dem ersten, dem zweiten und dem dritten Parameter in einem Fall von in zwei nicht aneinandergrenzenden Clustern zugeteilten Ressourcen gleich einer Anzahl von Ressourcen ist, die die Cluster trennen, und in einem Fall von aneinandergrenzenden zugeteilten Ressourcen auf eine vordefinierte Weise mit entweder einem Nullwert oder einem Wert gleich der gesamten Anzahl von Ressourcen $N_{RBG}$ plus ein minus zweimal dem Wert des anderen Parameters und minus dem Wert des einen Parameters anzeigt, ob die gesamte Menge von zugeteilten Ressourcen ungeradzahlig oder geradzahlig ist;

und dass die Vorrichtung weiterhin folgendes aufweist:

- Mittel zum Bestimmen eines Paars eines ersten und eines zweiten Parameters, die den zugeteilten Ressourcen entsprechen, wobei Paare eines ersten und eines zweiten Parameters, die möglichen zugeteilten Ressourcen entsprechen, auf eine vordefinierte Weise in einen Rang eingereiht sind, wobei das bestimmte Paar einen Rang unter den Paaren hat,

- Mittel zum Erhalten des Werts, der gleich einer Summe der maximalen Anzahl möglicher Werte ist, die den dritten Parameter für jedes Paar eines ersten und eines zweiten Parameters annehmen können, das einen niedrigeren Rang als das bestimmte Paar eines ersten und eines zweiten Parameters hat, plus einer Information, die den Wert des dritten Parameters darstellt,

- Mittel zum Transferieren des erhaltenen Werts zu der mobilen Station.

6. Computerprogramm, das direkt ladbar in eine programmierbare Vorrichtung sein kann und Anweisungen oder Teilbereiche eines Codes zum Implementieren der Schritte des Verfahrens nach einem der Ansprüche 1 und 2 oder der Schritte des Verfahrens nach Anspruch 3 umfasst, wenn das Computerprogramm auf der programmierbaren Vorrichtung ausgeführt wird.

7. Informationsspeichereinrichtung mit einem Computerprogramm, das direkt ladbar in eine programmierbare Vorrichtung sein kann und Anweisungen oder Teilbereiche eines Codes zum Implementieren der Schritte des Verfahrens nach einem der Ansprüche 1 und 2 oder der Schritte des Verfahrens nach Anspruch 3 umfasst, wenn die Informationsspeichereinrichtung durch die programmierbare Vorrichtung gelesen wird und das Computerprogramm auf der programmierbaren Vorrichtung ausgeführt wird.

**Revendications**

**1.** Procédé pour déterminer une valeur dérivée de premier, second et troisième paramètres qui permettent à une station mobile MS d'identifier quelles ressources d'un réseau de télécommunication sans-fil sont allouées à la station mobile par une station de base BS, lesdites ressources étant des sous-porteuses ou des blocs de ressources dans le domaine fréquentiel, lesdites ressources étant allouées dans deux regroupements non-contigus d'égale taille, le procédé étant exécuté par la station de base, le procédé comprenant l'étape suivante :

- allouer (S700) des ressources à la station mobile parmi un nombre total de ressources $N_{RBG}$,
**caractérisé en ce que** :
- un paramètre (N) parmi les premier, second et troisième paramètres est un identifiant de la première ressource allouée du premier regroupement ;
- un autre paramètre (M) parmi les premier, second et troisième paramètres est égal à la quantité de ressources comprises dans chaque regroupement ;
- le paramètre restant (L) parmi les premier, second et troisième paramètres est égal à un nombre de ressources séparant les deux regroupements et est au moins égal à 1;
et **en ce que** le procédé comprend en outre les étapes suivantes :
- déterminer un couple de premier et second paramètres qui correspondent aux ressources allouées, des couples de premier et second paramètres qui correspondent à des ressources allouées possibles étant classés de manière prédéfinie, le couple déterminé ayant un classement parmi lesdits couples,
- obtenir (S702) ladite valeur, qui est égale à une somme du nombre maximum de valeurs possibles que peut prendre le troisième paramètre pour chaque couple de premier et second paramètres qui a un classement plus bas que le couple de premier et second paramètres déterminé plus une information représentative de la valeur du troisième paramètre,
- transférer (S703) la valeur obtenue à la station mobile.

**2.** Procédé selon la revendication 1, **caractérisé en ce qu'**un premier couple a un classement plus bas qu'un second couple si la valeur du premier paramètre du premier couple est plus basse que la valeur du premier paramètre du second couple, ou si la valeur du premier paramètre du premier couple est égale à la valeur du premier paramètre du second couple et la valeur du second paramètre du premier couple est plus basse que la valeur du second paramètre du second couple.

**3.** Procédé pour déterminer une valeur dérivée de premier, second et troisième paramètres qui permettent à une station mobile MS d'identifier quelles ressources d'un réseau de télécommunication sans-fil sont allouées à la station mobile par une station de base BS, lesdites ressources étant des sous-porteuses ou des blocs de ressources dans le domaine fréquentiel, lesdites ressources étant allouées dans deux regroupements contigus ou dans deux regroupements non-contigus d'égale taille, où dans le cas de deux regroupements contigus la taille d'un regroupement est égale à la taille de l'autre regroupement ou à la taille de l'autre regroupement incrémentée de un, le procédé étant exécuté par la station de base, le procédé comprenant l'étape suivante :

- allouer (S700) des ressources à la station mobile parmi un nombre total de ressources $N_{RBG}$,
**caractérisé en ce que** :
- un paramètre (N) parmi les premier, second et troisième paramètres est un identifiant de la première ressource allouée du premier regroupement ;
- un autre paramètre (M) parmi les premier, second et troisième paramètres est égal à la quantité totale de ressources allouées divisée par deux lorsque la quantité totale de ressources allouées est paire et est égal à la quantité totale de ressources allouées plus un divisée par deux lorsque la quantité totale de ressources allouées est impaire ;
- le paramètre restant (L) parmi les premier, second et troisième paramètres, en cas de ressources allouées dans des regroupements non-contigus, est égal à un nombre de ressources séparant les deux regroupements et, en cas de ressources allouées dans des regroupements contigus, indique de manière prédéfinie si la quantité totale de ressources allouées est impaire ou paire avec soit une valeur nulle soit une valeur égale au nombre total de ressources $N_{RBG}$ plus un moins deux fois la valeur dudit autre paramètre et moins la valeur dudit un paramètre ;
et **en ce que** le procédé comprend en outre les étapes suivantes :

- déterminer un couple de premier et second paramètres qui correspondent aux ressources allouées, des couples de premier et second paramètres qui correspondent à des ressources allouées possibles étant classés de manière prédéfinie, le couple déterminé ayant un classement parmi lesdits couples,
- obtenir (S702) ladite valeur, qui est égale à une somme du nombre maximum de valeurs possibles que peut prendre le troisième paramètre pour chaque couple de premier et second paramètres qui a un classement plus bas que le couple de premier et second paramètres déterminé plus une information représentative de la valeur du troisième paramètre,
- transférer (S703) la valeur obtenue à la station mobile.

4. Dispositif pour déterminer une valeur dérivée de premier, second et troisième paramètres qui permettent à une station mobile MS d'identifier quelles ressources d'un réseau de télécommunication sans-fil sont allouées à la station mobile par une station de base BS, lesdites ressources étant des sous-porteuses ou des blocs de ressources dans le domaine fréquentiel, lesdites ressources étant allouées dans deux regroupements non-contigus d'égale taille, ledit dispositif comprenant :

- des moyens pour allouer (S700) des ressources à la station mobile parmi un nombre total de ressources $N_{RBG}$, **caractérisé en ce que** :
- un paramètre (N) parmi les premier, second et troisième paramètres est un identifiant de la première ressource allouée du premier regroupement ;
- un autre paramètre (M) parmi les premier, second et troisième paramètres est égal à la quantité de ressources comprises dans chaque regroupement ;
- le paramètre restant (L) parmi les premier, second et troisième paramètres est égal à un nombre de ressources séparant les deux regroupements et est au moins égal à 1;
et **en ce que** ledit dispositif comprend en outre :
- des moyens pour déterminer un couple de premier et second paramètres qui correspondent aux ressources allouées, des couples de premier et second paramètres qui correspondent à des ressources allouées possibles étant classés de manière prédéfinie, le couple déterminé ayant un classement parmi lesdits couples,
- des moyens pour obtenir (S702) ladite valeur, qui est égale à une somme du nombre maximum de valeurs possibles que peut prendre le troisième paramètre pour chaque couple de premier et second paramètres qui a un classement plus bas que le couple de premier et second paramètres déterminé plus une information représentative de la valeur du troisième paramètre,
- des moyens pour transférer (S703) la valeur obtenue à la station mobile.

5. Dispositif pour déterminer une valeur dérivée de premier, second et troisième paramètres qui permettent à une station mobile MS d'identifier quelles ressources d'un réseau de télécommunication sans-fil sont allouées à la station mobile par une station de base BS, lesdites ressources étant des sous-porteuses ou des blocs de ressources dans le domaine fréquentiel, lesdites ressources étant allouées dans deux regroupements contigus ou dans deux regroupements non-contigus d'égale taille, où dans le cas de deux regroupements contigus la taille d'un regroupement est égale à la taille de l'autre regroupement ou à la taille de l'autre regroupement incrémentée de un, le procédé étant exécuté par la station de base, ledit dispositif comprenant :

- des moyens pour allouer (S700) des ressources à la station mobile parmi un nombre total de ressources $N_{RBG}$, **caractérisé en ce que** :
- un paramètre (N) parmi les premier, second et troisième paramètres est un identifiant de la première ressource allouée du premier regroupement ;
- un autre paramètre (M) parmi les premier, second et troisième paramètres est égal à la quantité totale de ressources allouées divisée par deux lorsque la quantité totale de ressources allouées est paire et est égal à la quantité totale de ressources allouées plus un divisée par deux lorsque la quantité totale de ressources allouées est impaire ;
- le paramètre restant (L) parmi les premier, second et troisième paramètres, en cas de ressources allouées dans des regroupements non-contigus, est égal à un nombre de ressources séparant les deux regroupements et, en cas de ressources allouées dans des regroupements contigus, indique de manière prédéfinie si la quantité totale de ressources allouées est impaire ou paire avec soit une valeur nulle soit une valeur égale au nombre total de ressources $N_{RBG}$ plus un moins deux fois la valeur dudit autre paramètre et moins la valeur dudit un paramètre ;
et **en ce que** ledit dispositif comprend en outre :
- des moyens pour déterminer un couple de premier et second paramètres qui correspondent aux ressources allouées, des couples de premier et second paramètres qui correspondent à des ressources allouées possibles étant classés de manière prédéfinie, le couple déterminé ayant un classement parmi lesdits couples,
- des moyens pour obtenir (S702) ladite valeur, qui est égale à une somme du nombre maximum de valeurs possibles que peut prendre le troisième paramètre pour chaque couple de premier et second paramètres qui a un classement plus bas que le couple de premier et second paramètres déterminé plus une information représentative de la valeur du troisième paramètre,
- des moyens pour transférer (S703) la valeur obtenue à la station mobile.

6. Programme d'ordinateur qui peut être directement chargeable dans un dispositif programmable, comprenant des instructions ou portions de code pour implémenter les étapes du procédé selon l'une quelconque des revendications 1 et 2, ou les étapes du procédé selon la revendication 3, lorsque ledit programme d'ordinateur est exécuté sur le dispositif programmable.

7. Moyens de stockage d'informations comprenant un programme d'ordinateur qui peut être directement chargeable dans un dispositif programmable, comprenant des instructions ou portions de code pour implémenter les étapes du procédé selon l'une quelconque des revendications 1 et 2, ou les étapes du procédé selon la revendication 3, lorsque lesdits moyens de stockage d'informations sont lus par le dispositif programmable et ledit programme d'ordinateur est exécuté sur le dispositif programmable.

## Fig. 1

## Fig. 2

## Fig. 3

Fig. 4

Fig. 5

Fig. 6

S700 — Allocate groups of resource blocks

S701 — Determine N, L M

S702 — Calculate sum

S703 — Transfer information

# Fig. 7

| | 0 | 1 | 2 | 3 | 4 | 5 | 6 | 7 | 8 | 9 | 10 |
|---|---|---|---|---|---|---|---|---|---|---|---|
| 1 | 11 | 10 | 9 | 8 | 7 | 6 | 5 | 4 | 3 | 2 | 1 |
| 2 | 9 | 8 | 7 | 6 | 5 | 4 | 3 | 2 | 1 | | |
| 3 | 7 | 6 | 5 | 4 | 3 | 2 | 1 | | | | |
| 4 | 5 | 4 | 3 | 2 | 1 | | | | | | |
| 5 | 3 | 2 | 1 | | | | | | | | |
| 6 | 1 | | | | | | | | | | |

## Fig. 8

| 00 | M | M | |
|---|---|---|---|
| 01 | Floor(2M/3) | 2M - floor(2M/3) | |
| 10 | Floor(4M/3) | 2M- Floor(4M/3) | |
| 11 | A=Floor(2M/3) | B=Floor((2M- floor(2M/3))/2 | 2M-A-B |

## Fig. 9

| | 0 | 1 | 2 | 3 | 4 | 5 | 6 | 7 | 8 | 9 | 10 | 11 | 12 |
|---|---|---|---|---|---|---|---|---|---|---|---|---|---|
| 1 | 13 | 12 | 11 | 10 | 9 | 8 | 7 | 6 | 5 | 4 | 3 | 2 | 1 |
| 2 | 11 | 10 | 9 | 8 | 7 | 6 | 5 | 4 | 3 | | | | |
| 3 | 9 | 8 | 7 | 6 | 5 | 4 | 3 | | | | | | |
| 4 | 7 | 6 | 5 | 4 | 3 | | | | | | | | |
| 5 | 5 | 4 | 3 | | | | | | | | | | |
| 6 | 3 | | | | | | | | | | | | |

## Fig. 10

S110 — Receive information

S111 — Determine N, L M

S112 — Identify ressources

## Fig. 11

24

| | 0 | 1 | 2 | 3 | 4 | 5 | 6 | 7 | 8 |
|---|---|---|---|---|---|---|---|---|---|
| 1 | 5 | 4 | 4 | 3 | 3 | 2 | 2 | 1 | 1 |
| 2 | 3 | 3 | 2 | 2 | 1 | 1 | | | |
| 3 | 2 | 1 | 1 | | | | | | |

# Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2136503 A
- WO 2009043208 A

### Non-patent literature cited in the description

- 3rd Generation Partnership Project; Technical Specification Group Radio Access Network; Evolved Universal Terrestrial Access (E-UTRA). *Physical layer procedures (Release 8),* 01 September 2009
- Non-contiguous uplink resource allocation for LTE-A. *ASUSTEK, 3GPP draft R1-093881,* 12 October 2009
- Uplink non-contiguous resource allocation for LTE-Advanced. *ZTE, 3GPP draft R1-093903,* 12 October 2009